# EUROPEAN PATENT APPLICATION

(11) **EP 4 607 608 A1**
(43) Date of publication of application: **27.08.2025**
(21) Application number: 23902795.6
(22) Date of filing: 14.12.2023
(51) Int. Cl.: H01M 4/36, H01M 4/38, H01M 4/48, H01M 10/0525

(54) **NEGATIVE ELECTRODE MATERIAL, PREPARATION METHOD THEREFOR AND LITHIUM-ION BATTERY**

(30) Priority: 16.12.2022 CN 202211627204
(71) Applicant: BTR New Material Group Co., Ltd., Shenzhen, Guangdong 518106 (CN)
(72) Inventor: LIANG, Tengyu, Shenzhen, Guangdong 518106 (CN); PANG, Chunlei, Shenzhen, Guangdong 518106 (CN); SHI, Xiaotai, Shenzhen, Guangdong 518106 (CN); WANG, Jingwei, Shenzhen, Guangdong 518106 (CN); REN, Jianguo, Shenzhen, Guangdong 518106 (CN); HE, Xueqin, Shenzhen, Guangdong 518106 (CN)
(74) Representative: Metida
(86) International application number: PCT/CN2023/138789
(87) International publication number: WO 2024/125601

(57) **Abstract**

The present application provides a negative electrode material, a preparation method therefor and a lithium-ion battery. The negative electrode material includes silicon oxide and a compound of metal M. The compound of metal M includes at least one of an oxide of metal M and a silicate of metal M. The metal M is at least one metal with an electronegativity less than 1.8. An amount of gas produced by the negative electrode material of 10g, which is mixed with a hydrochloric acid of 10 mL and a concentration of 1 mol/L, is less than or equal to 1 mL. The negative electrode material and the preparation method therefor provided by the present application may reduce the volume expansion of the negative electrode material, improve the rate performance and cycling stability of the negative electrode material.

## Description

The present application claims priority to China Application No. 202211627204.9, having a filing date of December 16, 2022, with a title of "negative electrode material, preparation method therefor and lithium-ion battery", filed in China National Intellectual Property Administration, the entire contents of which are hereby incorporate by reference.

### FIELD

The subject matter relates to a field of negative electrode materials, and more particularly, to a negative electrode material, a preparation method therefor, and a lithium-ion battery.

### BACKGROUND

Electric new energy vehicles are future development direction of automobile market, and the core components of the vehicles are lithium-ion batteries. With the development of the market, there is an increasing demand for batteries with high capacity density. The use of new positive and negative electrode materials with high specific capacity is one important method to improve the energy density of the batteries.

More and more new materials such as metals, oxides, and metal alloys are applied as active substances into the negative electrode materials to continuously explore various ways to improve the energy density of the batteries. Taking silicon-based negative electrode material as an example, the silicon-based negative electrode material, as one of the active substances mentioned above, is widely regarded as the next generation of negative electrode materials. Silicon is highly praised for the ultra-high theoretical specific capacity (4200 mAh/g), low delithiation potential (<0.5 V), slightly higher voltage plateau compared to graphite, less possibility of surface lithium deposition during charging, and better safety performance. However, the silicon negative electrode may experience severe volume expansion during a cycling process, resulting in pulverization and breakage of the material and rapid degradation of the cycling performance of the battery.

In related arts, metal M is used to remove some oxygen from the silicon-oxygen material system. The reduction products of the silicon oxide material include SiOₓ, Si, and silicide of metal M, respectively. The formation of a portion of the silicide of M will release a large amount of heat, causing a significant increase in the grain size of the Si microcrystals and affecting the cycling performance and expansion rate of the material.

Therefore, how to suppress the volume expansion of the negative electrode material and improve cycling stability are problematic.

### SUMMARY

The present application provides a negative electrode material, a preparation method therefor, and a lithium-ion battery, which may reduce the volume expansion of the negative electrode material, and improve the rate performance and cycling stability of the negative electrode material.

In a first aspect, the present application provides a negative electrode material. The negative electrode material includes an active substance. The active substance includes silicon oxide and a compound of metal M. The compound of metal M includes at least one of an oxide of metal M and a silicate of metal M. The metal M is at least one metal with an electronegativity less than 1.8;
an amount of gas produced by the negative electrode material of 10g, which is mixed with a hydrochloric acid of 10 mL and a concentration of 1 mol/L, is less than or equal to 1 mL.

In some embodiments, the silicon oxide includes silicon element and oxygen element. An atomic ratio of the silicon element to the oxygen element is in a range from 0 to 2, and the atomic ratio is not 0.

In some embodiments, the silicon oxide has a chemical formula of SiOₓ, wherein 0<x≤2.

In some embodiments, the metal M is selected from a group consisting Li, K, Na, Mg, Ca, Al, La, Zn, Ti, Mn, and any combination thereof.

In some embodiments, the metal M is Mg.

In some embodiments, the silicon oxide includes Si microcrystals. The Si microcrystals have a grain size less than or equal to 20 nm.

In some embodiments, a pH value of the negative electrode material is in a range from 8 to 14.

In some embodiments, a specific surface area of the negative electrode material is less than or equal to 30 m²/g.

In some embodiments, a median particle size of the negative electrode material is in a range from 1 µm to 20 µm.

In some embodiments, a wadell sphericity of the negative electrode material is denoted as Φ, wherein 0.3<Φ<1.

In some embodiments, the negative electrode material has a characteristic peak A, a characteristic peak B, and/or a characteristic peak C when analyzed by X-Ray Diffraction. The characteristic peak A represents a characteristic peak of Si or SiO. The characteristic peak B represents a characteristic peak of the oxide of metal M. The characteristic peak C represents a characteristic peak of the silicate of metal M. A characteristic peak of silicide of metal M is denoted as a characteristic peak D, and a peak height ratio of a strongest peak of the characteristic peak D to a strongest peak of the characteristic peak A is I, wherein 0≤ 1<0.05.

In a second aspect, the present application provides a negative electrode material. The negative electrode material includes an active substance. The active substance includes silicon oxide and compound of metal M. The compound of metal M includes at least one of an oxide of metal M and a silicate of metal M. The metal M is at least one metal with an electronegativity less than 1.8;
the negative electrode material has a characteristic peak A, a characteristic peak B, and/or a characteristic peak C when analyzed by X-Ray Diffraction. The characteristic peak A represents a characteristic peak of Si or SiO. The characteristic peak B represents a characteristic peak of the oxide of metal M. The characteristic peak C represents a characteristic peak of the silicate of metal M. A characteristic peak of silicide of metal M is denoted as a characteristic peak D, and a peak height ratio of a strongest peak of the characteristic peak D to a strongest peak of the characteristic peak A is I, wherein 0≤I<0.05.

In some embodiments, the silicon oxide includes silicon element and oxygen element. An atomic ratio of the silicon element to the oxygen element is in a range from 0 to 2, and the atomic ratio is not 0.

In some embodiments, the silicon oxide has a chemical formula of SiOₓ, wherein 0<x≤2.

In some embodiments, the metal M is selected from a group consisting Li, K, Na, Mg, Ca, Al, La, Zn, Ti, Mn, and any combination thereof.

In some embodiments, the metal M is Mg.

In some embodiments, the silicon oxide includes Si microcrystals. The Si microcrystals have a grain size less than or equal to 20 nm.

In some embodiments, a pH value of the negative electrode material is in a range from 8 to 14.

In some embodiments, a specific surface area of the negative electrode material is less than or equal to 30 m²/g.

In some embodiments, a median particle size of the negative electrode material is in a range from 1 µm to 20 µm.

In some embodiments, a wadell sphericity of the negative electrode material is denoted as Φ, wherein 0.3<Φ<1.

In some embodiments, the negative electrode material further includes a carbon material formed on at least a portion of a surface of the active substance.

In some embodiments, the negative electrode material further includes a carbon material layer formed on at least a portion of a surface of the active substance. A thickness of the carbon material layer is in a range from 10 nm to 500 nm.

In some embodiments, a mass ratio of carbon element in the negative electrode material is in a range from 1% to 40%.

In some embodiments, a porosity of the negative electrode material is less than 20%.

In some embodiments, a specific heat capacity of the negative electrode material is in a range from 0.2 J/(g.K) to 2.0 J/(g.K).

In some embodiments, the negative electrode material has pores, and a volume ratio of micropores with a pore size less than 2 nm to all of the pores is in a range from 1% to 5%.

In a third aspect, the present application further provides a preparation method for a negative electrode material. The method includes following steps:
heating a mixture including a metal M-containing raw material and a silicon-oxygen-containing raw material under reduced pressure to form vapors of the metal M and the silicon-oxygen-containing raw material, and allowing the vapors to fully mix for 1 minute to 600 minutes, wherein the metal M is at least one metal with an electronegativity less than 1.8;
cooling the mixed vapors to obtain an active substance, wherein the active substance includes silicon oxide and a compound of metal M, wherein the compound of metal M includes at least one of an oxide of metal M and a silicate of metal M.

In some embodiments, the metal M-containing raw material includes at least one of a simple substance of metal M and an oxide of metal M.

In some embodiments, the metal M is selected from a group consisting Li, K, Na, Mg, Ca, Al, La, Zn, Ti, Mn, and any combination thereof.

In some embodiments, the silicon-oxygen-containing raw material includes at least one of a mixture of Si, SiO_{y}, and SiO₂, a mixture of SiO_{y} and Si, and a mixture of Si and SiO₂, wherein 0<y<2.

In some embodiments, a molar amount of the metal M in the metal M-containing raw material is denoted as n_{M}, a molar amount of Si in the silicon-oxygen-containing raw material is denoted as n_{Si}, wherein n_{M}: n_{Si}=(0.2-1): 1.

In some embodiments, the silicon oxide includes silicon element and oxygen element. An atomic ratio of the silicon element to the oxygen element is in a range from 0 to 2, and the atomic ratio is not 0.

In some embodiments, the silicon oxide has a chemical formula of SiOₓ, wherein 0<x≤2.

In some embodiments, the heating under reduced pressure is performed at a temperature in a range from 900 °C to 2000 °C.

In some embodiments, the heating under reduced pressure is performed at a pressure in a range from 0.1 Pa to 1000 Pa.

In some embodiments, the cooling is performed at a temperature in a range from 500 °C and 900 °C.

In some embodiments, the heating under reduced pressure is performed at a pressure in a range from 0.1 Pa to 1000 Pa.

In some embodiments, the method further includes repeating the above steps (1) and (2), and a total heat preservation duration is controlled to be 1 hour to 120 hours.

In some embodiments, the cooled active substance is subjected to carbon coating treatment to obtain the negative electrode material. The carbon coating treatment includes at least one of solid-phase carbon coating, liquid-phase carbon coating, and gas-phase carbon coating.

In some embodiments, the carbon coating treatment is carried out by heating the cooled active substance, introducing protective gas and carbon source gas, such that the carbon source gas undergoes heat pyrolysis to obtain the negative electrode material.

In some embodiments, the carbon source gas is a hydrocarbon.

In some embodiments, the carbon source gas includes at least one of methane, ethylene, acetylene, propyne, propylene, propane, toluene, benzene, styrene, and phenol.

In some embodiments, the heat pyrolysis is performed at a temperature in a range from 600 °C to 1000 °C, and for a duration in a range from 30 minutes to 24 hours.

In some embodiments, the carbon coating treatment is carried out by mixing the cooled active substance with a solid-phase carbon source to form a mixture, and the mixture is subjected to a carbonizing treatment to obtain the negative electrode material.

In some embodiments, the carbonizing treatment is performed at a temperature in a range from 500 °C to 1000 °C, and for a duration in a range from 30 minutes to 24 hours.

In some embodiments, the solid-phase carbon source includes at least one of carbohydrate, ester, hydrocarbon, organic acid, and polymer.

In some embodiments, the solid-phase carbon source includes at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, a mass ratio of the solid-phase carbon source to the active substance is 5:(5-95).

In a fourth aspect, the present application provides a battery, which includes the negative electrode material as described in the first and/or second aspects, or the negative electrode material prepared by the method as described in the third aspect.

The implementations of the present application at least have the following advantages:

Firstly, according to the negative electrode material of the present application, the active substance of the negative electrode material includes silicon oxide and compound of metal M. The compound of metal M is dispersed on the silicon oxide, and the amount of gas produced by the negative electrode material that is mixed with hydrochloric acid is less than or equal to 1 mL. That is, the compound of metal M includes oxide of metal M and/or silicate of metal M, and almost all of the compound does not exist in the form of silicide of metal M, which may effectively control the grain size of the Si microcrystals in the silicon oxide. The compound of metal M is dispersed on the silicon oxide, which means that the compound of metal M may also be embedded in the silicon oxide particle or between the silicon oxide particles, such that the rate performance and cycling stability of the negative electrode material are improved.

According to the preparation method for the negative electrode material of the present application, the mixture including the metal M-containing raw material and the silicon-oxygen-containing raw material are heated under reduced pressure to form vapors of the metal M and the silicon-oxygen-containing raw material. By fulling mixing the vapors, excess local vapor of the metal M is reduced, such that Si simple substance and silicide of metal M, which are formed by the reduction of local vapor of the silicon-oxygen-containing raw material, are reduced. Then, the mixed vapors are cooled to obtain the mixture including the silicon oxide and the compound of metal M. The compound of metal M is dispersed on the silicon oxide, which means that the compound of metal M may also be embedded in the silicon oxide particle or between the silicon oxide particles. Almost all of the compound does not exist in the form of silicide of metal M, which may effectively control the grain size of the Si microcrystals in the silicon oxide. Thus, the expansion degree of the negative electrode material is controlled, such that the negative electrode material with low expansion degree and excellent cycling performance may be obtained.

### BRIEF DESCRIPTION OF THE DRAWINGS

FIG. 1 is a flowchart of a preparation method for a negative electrode material according to an embodiment of the present application;
FIG. 2 is a diagrammatic view showing an amount of gas produced by the negative electrode material being tested according to an embodiment of the present application;
FIG. 3 is an XRD diagram of silicon in the negative electrode material prepared by Example 1 of the present application;
FIG. 4 is an XRD diagram of MgSiO₃ in the negative electrode material prepared by Example 1 of the present application;
FIG. 5 is an XRD diagram of Mg₂SiO₄ in the negative electrode material prepared by Example 1 of the present application;
FIG. 6 is a specific heat capacity curve of the negative electrode material prepared by Example 1 of the present application.

### DETAILED DESCRIPTION

The following descriptions are preferred embodiments of the present application. It should be noted that for ordinary skilled in the art, several changes and modifications may be made within the principles of the embodiments of the present application. Such changes and modifications will still fall within the protection scope of the embodiments of the present application.

Usually, metal M is used to remove some oxygen from the silicon-oxygen material system. The reduction products of the silicon oxide material include SiOₓ, Si, and silicide of metal M, respectively. The formation of a portion of the silicide of M releases a large amount of heat, causing a significant increase in the grain size of the Si microcrystals. Furthermore, due to the existence of a large amount of the silicide of M in the negative electrode material, there is a lot of free Si simple substances in the negative electrode material, which produces a large amount of gas after the negative electrode material is in contact with the electrolyte. Moreover, the large grain size of Si microcrystals causes excessive expansion stress in the local negative electrode material, which may easily result in pulverization and breakage of the particles and affect the cycling performance and expansion degree of the material. At present, acid washing may be used to remove the silicide of M from the material. However, the acid washing cannot change the grain size of the Si microcrystals, and safety hazards may occur during the acid washing process. When SiO₂ as the sintering product of the silicide of M is mixed into the negative electrode material, the specific capacity of the negative electrode material is reduced. Thus, it can be seen that using the acid washing process to control the concentration of the silicide of M in the negative electrode material is inefficient, time consuming, laborious, and increases the production costs.

The present application provides a negative electrode material. The negative electrode material includes an active substance. The active substance includes silicon oxide and compound of metal M. The compound of metal M includes at least one of an oxide of metal M and a silicate of metal M. The metal M is at least one metal with an electronegativity less than 1.8.

An amount of gas produced by the negative electrode material of 10g, which is mixed with a hydrochloric acid of 10 mL and a concentration of 1 mol/L, is less than or equal to 1 mL.

In the embodiment, the active substance of the negative electrode material includes silicon oxide and compound of metal M. The compound of metal M is dispersed on the silicon oxide, and the amount of gas produced by the negative electrode material that is mixed with hydrochloric acid is less than or equal to 1 mL. That is, the compound of metal M includes oxide of metal M and/or silicate of metal M, and almost all of the compound does not exist in the form of silicide of metal M, which may effectively control the grain size of the Si microcrystals in the silicon oxide. The compound of metal M is dispersed on the silicon oxide, which means that the compound of metal M may also be embedded in the silicon oxide particle or between the silicon oxide particles, such that the rate performance and cycling stability of the negative electrode material are improved.

In some embodiments, the silicon oxide includes silicon element and oxygen element. An atomic ratio of the silicon element to the oxygen element is in a range from 0 to 2, and the atomic ratio is not 0. The atomic ratio of the silicon element to the oxygen element may be, but not limited to 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, and 2. Preferably, the atomic ratio of the silicon element to the oxygen element is in a range from 0 to 1, and the atomic ratio is not 0.

In some embodiments, the silicon oxide has a chemical formula of SiOₓ, wherein 0<x≤2, and x may be, but not limited to 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, and 2. Preferably, 0<x< 1.

In some embodiments, the metal M is selected from a group consisting Li, K, Na, Mg, Ca, Al, La, Zn, Ti, Mn, and any combination thereof

In some embodiments, an element distribution diagram is obtained by scanning a SEM cross-section of the negative electrode material particles by X-rays, which shows that Si, O, and metal M are uniformly dispersed on the surface. In the negative electrode material, Si, O, and metal M are uniformly distributed within the negative electrode material particles, which may effectively reduce the failure of active ingredients caused by penetration of air or other components into the interior of the primary particles. The structure and performance will not deteriorate after long-term storage, making the negative electrode material suitable for lithium-ion batteries. The main advantage of the uniform dispersion is to ensure that the physical and chemical states (such as the concentration of the silicate, the grain size of silicon, etc.) of different positions in the material are similar. Thus, the expansion degrees at different positions are at the same level during the lithiation and delithiation processes, and there will be no stress weak position caused by excessive local expansion, thereby improving the performances of the material.

In some embodiments, the metal M is Mg, and the compound of metal M include MgO, MgSiO₃, and Mg₂SiO₄. When the metal M is Mg, the grain size of the Si microcrystals may further be reduced, and the expansion of the negative electrode material may also be reduced.

In some embodiments, the compound of metal M is uniformly distributed in the primary particles of the active substance.

In some embodiments, the silicate of metal M is lithium silicate, which includes at least one of Li₂SiO₃, Li₄SiO₄, Li₂Si₂O₅, and Li₂Si₃O₇. Preferably, the lithium silicate is Li₂Si₂O₅.

In some embodiments, the negative electrode material has a characteristic peak A, a characteristic peak B, and/or a characteristic peak C when analyzed by X-Ray Diffraction. The characteristic peak A represents a characteristic peak of Si (based on PDF card number 27-1402) or a characteristic peak of SiO (based on PDF card number 30-1127). The characteristic peak B represents a characteristic peak of the oxide of metal M. The characteristic peak C represents a characteristic peak of the silicate of metal M. A characteristic peak of silicide of metal M is denoted as a characteristic peak D, and a peak height ratio of a strongest peak of the characteristic peak D to a strongest peak of the characteristic peak A is I, wherein 0≤I<0.05.

Specifically, the peak height ratio I may be 0.04, 0.03, 0.02, 0.01, 0.005, and 0. Preferably, 0≤I<0.01. When the peak height ratio I is 0, there is no silicide of metal M in the negative electrode material.

In some embodiments, the compound of metal M includes the oxide of metal M, which is uniformly distributed in the negative electrode material particles.

In some embodiments, the silicon oxide includes the Si microcrystals with a grain size less than or equal to 20 nm. Specifically, the grain size of the Si microcrystals of the silicon oxide may be, but not limited to 20 nm, 18 nm, 15 nm, 12 nm, 10 nm, 9.2 nm, 8 nm, 6.7 nm, 6 nm, 5 nm, and 3 nm. Other values not listed in the range are also applicable. The grain size of the Si microcrystals reflects the dismutation degree of the silicon oxide. The larger the grain size of the Si microcrystals, the higher dismutation degree, such that a large number of Si grains and SiO₂ will be generated after the reaction of silicon-oxygen-containing raw material, which lead to problems such as larger volume expansion caused by the Si simple substance and capacity reduction caused by the SiO₂ without any capacity, such that the excellent performance of the silicon oxide material itself cannot exhibit.

In some embodiments, the silicon oxide includes the Si microcrystals with a grain size less than or equal to 10 nm, which indicates that the volume of the Si microcrystals in the negative electrode is small. The Si microcrystals are dispersed in the silicon oxide, and the compound of metal M may not release a large amount of heat that affects the grain size of the Si microcrystals. Thus, the expansion of negative electrode material is effectively reduced, and the cycling performance is improved.

In some embodiments, a pH value of the negative electrode material is in a range from 8 to 14. The pH value may be, but not limited to 8, 9, 10, 10.5, 11, 11.5, 12, 13, and 14. Preferably, the pH value of the negative electrode material is in a range from 9 to 11.

In some embodiments, a specific surface area of the negative electrode material is less than or equal to 30 m²/g. The specific surface area may be, but not limited to 1.0 m²/g, 1.5 m²/g, 1.8 m²/g, 2.0 m²/g, 2.5 m²/g, 3.0 m²/g, 3.6 m²/g, 4.0 m²/g, 5 m²/g, 5.5 m²/g, 6.0 m²/g, 7.0 m²/g, 8.0 m²/g, 8.5 m²/g, 10.0 m²/g, 12.0 m²/g, 15.0 m²/g, 18.0 m²/g, and 30.0 m²/g. Other values not listed in the range are also applicable. Preferably, the specific surface area of the negative electrode material is less than 10 m²/g.

In some embodiments, a median particle size of the negative electrode material is in a range from 1 µm to 20 µm. The median particle size may be, but not limited to 1 µm, 2 µm, 2.5 µm, 3.5 µm, 4 µm, 6 µm, 8 µm, 9.5 µm, 10 µm, 12.5 µm, 15 µm, and 20 µm.

In some embodiments, a wadell sphericity of the negative electrode material is denoted as Φ, wherein 0.3<Φ<1. The Wadell sphericity may be 0.325, 0.43, 0.54, 0.65, 0.76, 0.87, 0.98, 0.99, etc. It can be understood that the wadell sphericity of the negative electrode material particles is not limited to the above values, and other values not listed in the range are also applicable.

In some embodiments, the negative electrode material further includes a carbon material formed on at least a portion of a surface of the active substance.

In some embodiments, the negative electrode material further includes a carbon material layer formed on at least a portion of the surface of the active substance. It can be understood that the carbon material layer on the surface of the active substance reduces the repeated generation of SEI that may result in breakage of the material particles, and is beneficial for improving the cycling performance of the negative electrode material and reducing the volume expansion caused by the generation of SEI.

In some embodiments, a thickness of the carbon material layer is in a range from 10 nm to 500 nm. Preferably, the thickness is in a range from 50 nm to 200 nm. Specifically, the thickness of the carbon material layer may be, but not limited to 10 nm, 50 nm, 80 nm, 100 nm, 120 nm, 150 nm, 200 nm, 300 nm, 400 nm, and 500 nm. Other values not listed in the range are also applicable.

In some embodiments, the active substance is dispersed in the carbon material, and the carbon material establishes a conductive network for the active substance, thereby overcoming the disadvantage of a poor conductivity of the active substance (such as silicon oxide SiOₓ), and facilitating the capacity utilization and the cycling stability of the silicon oxide.

In some embodiments, a mass ratio of carbon element in the negative electrode material is in a range from 1% to 40%. Specifically, the mass ratio may be 2%, 5%, 8%, 10%, 12%, 15%, 18%, 20%, 25%, 28%, 35%, and 40%. Of course, the mass ratio may also be other values within the above range, which are not limited.

In some embodiments, the negative electrode material may further include a coating layer located on the surface of the active substance. The coating layer includes a flexible polymer.

In some embodiments, the negative electrode material has pores, and a volume ratio of micropores with a pore size less than 2 nm to all of the pores is in a range from 1% to 5%. Specifically, the volume ratio may be, but not limited to 1%, 1.5%, 2%, 2.5%, 3%, 3.5%, 4%, 4.5%, and 5%. The existence of an appropriate amount of micropores may provide buffering space for the volume expansion of the active substance, thereby reducing particle breakage caused by excessive local stress.

In some implementations, a porosity of the negative electrode material is less than 20%. The smaller porosity is more conducive to maintaining the structural stability, enhancing the capacity and the cycling stability of negative electrode material. Specifically, the porosity of negative electrode materials may be 19.2%, 18%, 15%, 13%, 10%, 8%, 5%, 3%, and 2%. It can be understood that the porosity of negative electrode material is not limited to the listed values, and other values not listed in the range are also applicable.

In some embodiments, a specific heat capacity of the negative electrode material is in a range from 0.2 J/(g.K) to 2.0 J/(g.K). If the specific heat capacity of the negative electrode material is too high or too low, the existence of obvious impurities is indicated. By controlling the uniform degree of the compound of metal M distributed in the negative electrode material, the specific heat capacity of the material may be adjusted. When the negative electrode material includes a certain amount of metal silicide, the specific heat capacity of the negative electrode material will increase to be above 2.0 J/(g.K). Or, when the concentration of the metal element in the negative electrode material is high, and the specific heat capacity will decrease.

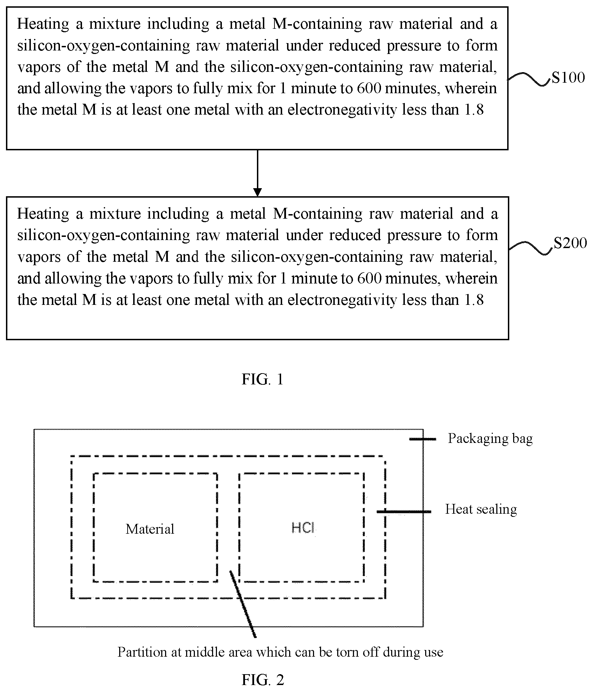

The present application further provides a preparation method for a negative electrode material. Referring to FIG. 1, the method includes the following steps S100-S200:

S100, a mixture including a metal M-containing raw material and a silicon-oxygen-containing raw material is heated under reduced pressure to form vapors of the metal M and the silicon-oxygen-containing raw material. The vapors are fully mixed for 1 minute to 600 minutes. The metal M is at least one metal with an electronegativity less than 1.8;

S200, the mixed vapors are cooled to obtain an active substance. The active substance includes silicon oxide and a compound of metal M. The compound of metal M includes at least one of an oxide of metal M and a silicate of metal M.

In the above implementation, the mixture including the metal M-containing raw material and the silicon-oxygen-containing raw material are heated under reduced pressure to form vapors of the metal M and the silicon-oxygen-containing raw material. By fulling mixing the vapors, excess local vapor of the metal M is reduced, such that Si simple substance and silicide of metal M, which are formed by the reduction of local vapor of the silicon-oxygen-containing raw material, are reduced. Then, the mixed vapors are cooled to obtain the mixture including the silicon oxide and the compound of metal M. The compound of metal M is dispersed on the silicon oxide, which means that the compound of metal M may also be embedded in the silicon oxide particle or between the silicon oxide particles. Almost all of the compound does not exist in the form of silicide of metal M, which may effectively control the grain size of the Si microcrystals in the silicon oxide. Thus, the expansion degree of the negative electrode material is controlled, such that the negative electrode material with low expansion degree and excellent cycling performance may be obtained.

The following provides a detailed description to introduce the implementation.

S100, a mixture including a metal M-containing raw material and a silicon-oxygen-containing raw material is heated under reduced pressure to form vapors of the metal M and the silicon-oxygen-containing raw material. The vapors are fully mixed for 1 minute to 600 minutes. The metal M is at least one metal with an electronegativity less than 1.8.

In some embodiments, the silicon-oxygen-containing raw material includes at least one of a mixture of Si, SiO_{y}, and SiO₂, a mixture of SiO_{y} and Si, and a mixture of Si and SiO₂, wherein 0<y<2.

In some embodiments, the metal M-containing raw material includes at least one of a metal simple substance and a metal oxide.

In some embodiments, the metal M is selected from a group consisting Li, K, Na, Mg, Ca, Al, La, Zn, Ti, Mn, and any combination thereof.

In some embodiments, a molar amount of the metal M in the metal M-containing raw material is denoted as n_{M}, a molar amount of Si in the silicon-oxygen-containing raw material is denoted as n_{Si}, wherein n_{M}: n_{Si}=(0.2-1): 1. Specifically, the n_{M}: n_{Si} may be 0.2:1, 0.3:1, 0.4:1, 0.5:1, 0.6:1, 0.7:1, 0.8:1, 0.9:1, and 1:1. Other values in the above range may also be applicable. By controlling the ratio of the molar amount of the metal M to the molar amount of silicon, the silicate of metal M is uniformly distributed in the primary particles of the active substance.

In some embodiments, the heating is performed at a temperature in a range from 900 °C to 2000 °C. Specifically, the heating is performed at a temperature of 900 °C, 1000 °C, 1100 °C, 1200 °C, 1400 °C, 1500 °C, 1550 °C, 1575 °C, 1600 °C, 1650 °C, 1700 °C, 1800 °C, 1900 °C, and 2000 °C. It can be understood that the above temperature is not limited thereto, and other values not listed in the range are also applicable.

In some embodiments, the heating under reduced pressure is carried out in a vacuum furnace. Before introducing the mixture thereinto, the vacuum furnace is preheated to a temperature in a range from 900 °C to 2000 °C.

In some embodiments, the pressure inside the vacuum furnace is in a range from 0.1 Pa to 1000 Pa. Specifically, the pressure may be, but not limited to 0.1 Pa, 50 Pa, 100 Pa, 200 Pa, 500 Pa, 600 Pa, 700 Pa, 800 Pa, 900 Pa, and 1000 Pa.

In some embodiments, the mixture, which is heated under reduced pressure, evaporates to form vapors of the metal M and the silicon-oxygen-containing raw material. At this time, a valve at an opening of a furnace tube of the vacuum furnace is closed to allow the vapors to stay in the vacuum furnace for 1 minute to 600 minutes, specifically, for 1 minute, 5 minutes, 10 minutes, 30 minutes, 60 minutes, 90 minutes, 120 minutes, 150 minutes, 300 minutes, 360 minutes, 420 minutes, and 600 minutes, but the duration is not limited thereto. The vacuum furnace generally includes the furnace tube and a cooling zone. Usually, in related arts, after the material is heated in the furnace tube to form the vapors, the vapors immediately enter the cooling zone for cooling. However, in the present application, the valve at the opening of the furnace tube communicates the furnace tube with or isolate the furnace tube from the cooling zone. By closing the valve at the opening of the furnace tube, the vapors may stay in the furnace tube, such that the raw materials after the reaction may remain the state of vapors and stay in a highpressure environment. After fully mixed, the uniformity of the vapors is greatly improved. The vapors are evenly mixed. Preferably, the staying duration is in a range from 30 min to 600 min.

S200, the mixed vapors are cooled to obtain an active substance. The active substance includes silicon oxide and a compound of metal M. The compound of metal M includes at least one of an oxide of metal M and a silicate of metal M.

In some embodiments, the cooling treatment is performed at a temperature in a range from 500 °C and 900 °C. Specifically, the temperature may be 500 °C, 550 °C, 600 °C, 650 °C, 700 °C, 750 °C, 800 °C, 850 °C, and 900 °C. It can be understood that the above temperature is not limited to the listed values, and other values not listed in the range are also applicable.

In some embodiments, since the vapors are fully mixed, the occurrence of local metal simple substance is suppressed. That is, the formation of Si simple substance and metal silicide is suppressed. The active substance obtained after being cooled does not require traditional acid washing or water washing process, and may be directly subjected to a subsequent carbon coating or secondary granulation processes.

In some embodiments, the cooling treatment is carried out in the cooling zone of the vacuum furnace, and the pressure in the cooling zone is in a range from 0.1 Pa to 1000Pa. Specifically, the pressure may be, but not limited to 0.1 Pa, 50 Pa, 100 Pa, 200 Pa, 500 Pa, 600 Pa, 700 Pa, 800 Pa, 900 Pa, and 1000 Pa.

In some embodiments, the steps S100 and S200 are repeated to allow the silicon-oxygen-containing raw material and the metal M-containing raw material to fully evaporate to form the mixed vapors, thereby allowing the compound of metal M after being cooled to be dispersed in the silicon oxide.

In some implementations, the steps (1) and (2) are repeated, and the total heat preservation duration is controlled to be 1 hour and 120 hours. Specifically, the total heat preservation duration may be 1 h, 5 h, 10 h, 15 h, 20 h, 30 h, 40 h, 50 h, 60 h, 120h, or any value in the above range. The repeat of the steps S100 and S200 may form more uniformly dispersed negative electrode material, and also suppress the formation of Si simple substance and metal silicide.

In some embodiments, the silicon oxide includes silicon element and oxygen element. An atomic ratio of the silicon element to the oxygen element is in a range from 0 to 2, and the atomic ratio is not 0. Specifically, the atomic ratio of the silicon element to the oxygen element may be, but not limited to 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, and 2. Preferably, the atomic ratio of the silicon element to the oxygen element is in a range from 0 to 1, and the atomic ratio is not 0.

In some embodiments, the silicon oxide has a chemical formula of SiOₓ, wherein 0<x≤2.Specifically, x may be, but not limited to 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8, 1.9, and 2. Preferably, 0<x<1.

According to another embodiment, the preparation method for the negative electrode material includes the following step:

Step S300, the active substance after being cooled is subjected to carbon coating treatment to obtain the negative electrode material.

The active substance after being cooled may be prepared by the steps S100 and S200.

The negative electrode material obtained by the above preparation method includes an active substance and a carbon material located on at least a portion of the surface of the active substance. The active substance includes silicon oxide and a compound of metal M. The chemical formula of the silicon oxide is SiOₓ, wherein 0 <x≤2.

In one embodiment, the carbon coating treatment specifically includes at least one of solid-phase carbon coating, liquid-phase carbon coating, and gas-phase carbon coating.

Specifically, the carbon coating treatment may be carried out by heating the cooled active substance, introducing protective gas and carbon source gas, such that the carbon source gas undergoes heat pyrolysis to obtain the negative electrode material.

In some embodiments, the carbon source gas used for the gas-phase carbon coating includes hydrocarbon.

In some embodiments, the carbon source gas includes at least one of methane, acetylene, ethylene, ethane, propane, propylene, acetylene, acetone, and benzene.

In some embodiments, a chemical vapor deposition device includes at least one of a rotary chemical vapor deposition reactor, a plasma enhanced chemical vapor deposition reactor, a chemical vapor deposition tubular furnace, and a fluidized bed. Specifically, the chemical vapor deposition device is at least one of a rotary furnace and a box furnace.

In some embodiments, the heat pyrolysis is performed at a temperature in a range from 600 °C to 1000 °C, and for a duration in a range from 2 hours and 20 hours.

In some implementations, the carbon source gas is introduced under the protective gas.

In some embodiments, the protective gas includes at least one of nitrogen, helium, neon, argon, krypton, and xenon.

In some embodiments, the carbon coating treatment is carried out by mixing the cooled active substance with a solid-phase carbon source to form a mixture, and the mixture is subjected to a carbonizing treatment to obtain the negative electrode material.

In some embodiments, the solid-phase carbon source includes at least one of carbohydrate, ester, hydrocarbon, organic acid, and polymer. Specifically, the solid-phase carbon source may be at least one of polyvinyl chloride, polyvinyl butyral, polyacrylonitrile, polyacrylic acid, polyethylene glycol, polypyrrole, polyaniline, sucrose, glucose, maltose, citric acid, asphalt, furfural resin, epoxy resin, and phenolic resin.

In some embodiments, the product after being cooled may be mixed with the carbon source by VC mixing, fusion, ball milling, three-dimensional mixing, or fluidized bed mixing.

In some embodiments, the mixing is carried out in a fusion machine. The mixing lasts for a direction of 0.5 h to 2h, and a rotation speed of the fusion machine is in a range from 500 r/min to 5000 r/min.

In some embodiments, a mass ratio of the solid-phase carbon source to the active substance is 5:(5-95).

In some embodiments, the carbonizing treatment is performed at a temperature in a range from 500 °C to 1000 °C, for a duration in a range from 2 hours to 20 hours.

In some embodiments, a device for performing the solid-phase carbon coating is at least one of rotary furnace, box furnace, roller kiln, tunnel kiln, and push plate kiln.

In some embodiments, the protective gas may be at least one of nitrogen, argon, helium, neon, krypton, and xenon.

The liquid-phase carbon coating may be carried out by uniformly mixing the product after being cooled with a carbon source. Then, the mixture is placed in a furnace, protective gas is introduced into the furnace, and the carbon source undergoes heat pyrolysis under a heat treatment and then is coated on the surface of the cooled product.

In some embodiments, the carbon source used for the liquid-phase carbon coating is an organic carbon source, which may specifically be low-temperature liquid-phase asphalt, furfuryl alcohol, glycidyl methacrylate, and triethylene glycol dimethacrylate.

In some embodiments, the protective gas may be at least one of nitrogen, argon, helium, neon, krypton, and xenon.

In some implementations, the heat treatment is performed at a temperature in a range from 600 °C to 1000 °C.

Furthermore, the method further includes sieving and demagnetizing the carbonized material to obtain negative electrode material.

In some embodiments, the sieving is performed by one of a fixed sieve, a drum sieve, a resonance sieve, a roller sieve, a vibrating sieve, and a chain sieve. The mesh number is in a range from 100 mesh to 500 mesh. Specifically, the mesh number may be 100 mesh, 200 mesh, 250 mesh, 325 mesh, 400 mesh, and 500 mesh. Preferably, the mesh number is 250 mesh. When the particle size of the negative electrode material is controlled within the above range, the processing performance of the negative electrode material may be improved.

In some embodiments, the demagnetizing is performed by one of a permanent magnet drum magnetic separator, an electromagnetic iron remover, and a pulsating high gradient magnetic separator. The demagnetizing process may control the concentration of magnetic substances in the negative electrode material, reduce the effect of the magnetic substance on the discharge process of the lithium-ion battery, thereby ensuring the safety of the battery in use.

The present embodiment further provides a battery, which includes the negative electrode material provided by any above embodiment of the present application or the preparation method for the negative electrode material provided by any above embodiment of the present application. The battery may be, but not limited to a lithium-ion battery or a sodium-ion battery. The battery provided by the embodiments of the present application has excellent rate performance and low volume expansion.

### Test method:

### 1) Particle size of negative electrode material:

The test method of the particle size refers to GB/T 19077-2016, which may be conveniently measured by a laser particle size analyzer, such as the Mastersizer 3000 laser particle size analyzer from Malvern Instruments Limited in UK.

### 2) Test method of the specific surface area of the negative electrode material:

At a room and low temperature, after measuring the adsorption amount of gas on the solid surface under different relative pressures, the adsorption amount of the single molecular layer of the sample was calculated based on the Brownian Etter Taylor adsorption theory and its formula (BET formula), such that the specific surface area of the negative electrode material was calculated.

### 3) pH value test of the negative electrode material:

The negative electrode material of 10 g was provided, and water of 10 g was added thereto and then stirred for 30 minutes. The supernatant was taken, and the pH value of the negative electrode material was measured.

### 4) Test method of the thickness of the carbon material layer:

The negative electrode material particles were subjected to a cross-sectional treatment by the FIB-SEM equipment, and the average thickness of the carbon material layer was measured through SEM.

### 5) Test method of the porosity of the negative electrode material:

Mercury intrusion porosimetry was used to measure the porosity of the negative electrode material particles.

### 6) Test method of the mass content of carbon element in the negative electrode material:

Thermogravimetric analysis was used to test the mass content of the carbon element in the negative electrode material.

### 7) Test method of the specific heat capacity of the negative electrode material:

The specific heat capacity of the negative electrode material was measured by a Nessler DSC instrument, with a temperature of 0 °C to 130 °C, a heating rate of 10 °C/min, an atmosphere of N₂, and a sample amount of 13 mg, thereby obtaining the specific heat capacity of the negative electrode material.

### 8) XRD test method of the negative electrode material:

The negative electrode material was made into a sheet, which was tested by an X-ray diffraction analyzer. The angle range was 10° to 90°, the scanning mode was step scan, the slit width was selected to be 1.0, the voltage and the current was set to be 40 kW and 40 mA, respectively. The measured data was analyzed by Jade 6.5 software, and the compositions of the negative electrode material were confirmed by comparing with PDF cards.

The X-ray diffraction analyzer had shown that characteristic peaks were observed in ranges of 27.5° to 29.5°, 46.3° to 48.3°, and 55.0° to 57.0°. The Si (111) peak at 28.6° was fitted. After obtaining the full width at half maximum (FWHM), the Scherrer formula was used to calculate the grain size of Si microcrystals.

The negative electrode material was added to an acid solution mixed by HCl and HNO₃. Then, the solution was stirred, and the liquid phase was separated therefrom and dried. The above X-ray diffraction analysis method was used to determine whether impurity peaks other than the characteristic peaks of Si, SiO, and SiO₂ exit. If impurities exit, the acid treatment was repeated. If not, an oxygen/nitrogen/hydrogen analyzer was used to measure the concentration of oxygen of the negative electrode material, thereby obtaining the value of x according to the formula x=28× oxygen concentration/(16-16×oxygen concentration).

### 9) Test method of the amount of gas produced by the negative electrode material:

As shown in FIG. 2, the negative electrode material of 10g and the hydrochloric acid of 10 mL and a concentration of 1 mol/L were encapsulated at two ends of a partition-typed liquid packaging bag, respectively, and their volume V1 was measured using a drainage method. Then, the partition at the middle area of the packaging bag was torn off, allowing the negative electrode material to fully mix with the hydrochloric acid at room temperature for 24 hours. The volume V2 was measured again by the same method. A difference between V2 and V1 was the amount of gas produced by the negative electrode material.

### 10) Button battery test:

The prepared negative electrode material, conductive carbon black, and polyacrylic acid binder were dissolved in N-methylpyrrolidone at a mass percentage of 75:15:10, mixed, coated on a copper foil current collector, and vacuum dried to obtain a negative electrode plate. A lithium metal sheet was used as a counter electrode. Then, a button battery was obtained by assembling the electrodes in a glove box filled with argon gas. A charge and discharge test was performed at a current density of 0.1C and a charge/discharge range of 0.01V to 1.5V

### 11) Electrochemical performance test:

The prepared negative electrode material was mixed with graphite at a ratio of 10:90 to obtain the negative electrode active substance. The, the negative electrode active substance was mixed with carboxymethylcellulose sodium CMC, adhesive of styrene butadiene rubber SBR, conductive agent of Super-P, and conductive agent of KS-6 at a mass ratio of 92:2:2:2 to prepare a negative electrode paste. The negative electrode paste was coated on a copper foil, vacuum dried, and rolled to prepare the negative electrode plate. Then, a ternary positive electrode plate (lithium nickel cobalt manganese oxide NCM523) prepared by an existing mature technology, an electrolyte of LiPF₆ of 1 mol/L together with vinyl carbonate, dimethyl carbonate, and methyl ethyl carbonate (v/v=1:1:1), a Celgard2400 separator, and a shell were assembled into a CR2016 simulated battery by an existing production technology. The cyclic performance was tested by performing a constant-current charge and discharge experiment at a current of 30 mA and under a charge/discharge voltage limited to be 0V to 1.5V. The LAND battery test system from Wuhan Jinnuo Electronics Co., Ltd was used during the test. The charge and discharge test was performed at a current density of 0.1C and a charge/discharge range of 0.005V to 1.5V.

The initial coulombic efficiency was equal to the ratio of the first cycle discharge capacity to the first cycle charge capacity.

The cycling was repeated for 50 times, and a micrometer was used to measure the thickness of the electrode plate of the lithium-ion battery at this time, which was denoted as H1. After 50 cycles, the expansion rate=(H1-H0)/H0 × 100%.

The cycling was repeated for 100 times, and the discharge capacity was recorded as the remaining capacity of the lithium-ion battery. The capacity retention rate=remaining capacity/initial capacity × 100%.

The following description are multiple examples to further explain the embodiments of the present application. The embodiments of the present application are not limited to the following examples, and appropriate changes may be implemented without changing the scope of the present application.

### Example 1

A preparation method for a negative electrode material, including the following steps:
(1) Li ingot of 100kg and SiO powders of 900kg, with a ratio n_{Li}: n_{Si} of 0.2:1, were placed into a vacuum furnace at 1600 °C;
(2) the valve at the opening of the furnace tube was closed, the furnace tube and the cooling area were evacuated to reach a pressure of 1000 Pa, and the evaporated vapors were stayed in the furnace for 60 minutes;
(3) the valve at the opening of the furnace tube was opened to allow the evaporated vapors to pass the cooling zone with a temperature of 900 °C, thereby allowing the vapors to condensed into SiOₓ (0<x≤2);
(4) steps (2) to (3) were repeated for a total heat preservation duration of 10 hours to obtain the active substance;
(5) the active substance was placed into a high-temperature box furnace, methane gas was introduced into the furnace under nitrogen protection, thereby performing the carbon coating treatment at 820 °C for 4 hours. The product was crushed and sieved to obtain the negative electrode material.

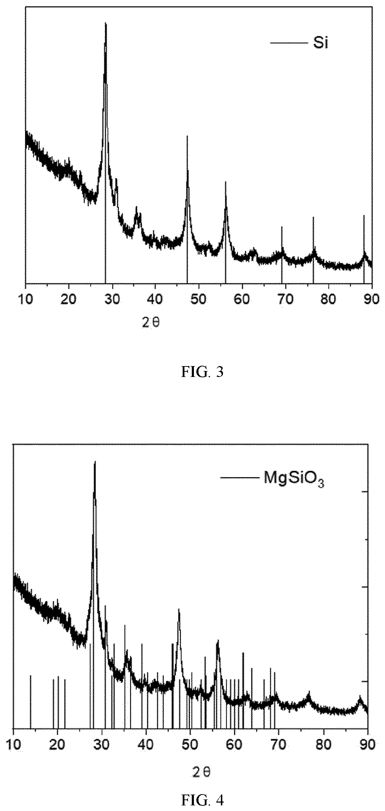

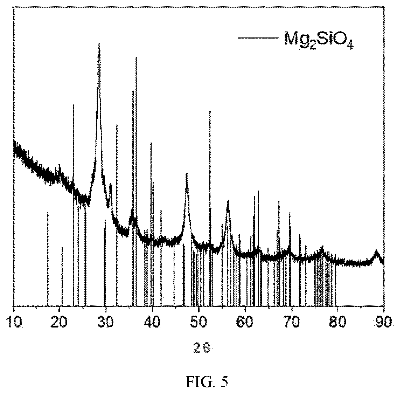

The negative electrode material prepared by the above example includes an active substance, which includes silicon oxide and Li compound. The Li compound includes Li₂O, Li₂SiO₃, and Li₄SiO₄. The specific surface area of the negative electrode material is 7.3 m²/g. As shown in FIGS. 3 to 5, the X-ray diffraction analysis reveals that the negative electrode material has characteristic peaks corresponding to Si or SiO, Li₂O, Li₂SiO₃, and Li₄SiO₄. The grain size of the Si microcrystals is 19.9 nm, and the pH value is 11.9.

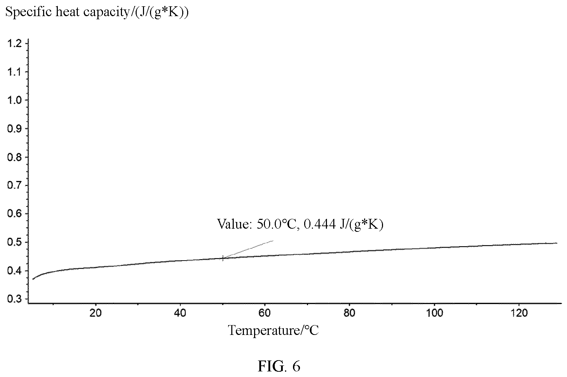

The mass ratio of carbon element in the negative electrode material is 10%. As shown in FIG. 6, and the specific heat capacity of the negative electrode material is 0.2 J/(g.K) to 2.0 J/(g.K). The porosity of the negative electrode material is 1.6%. The negative electrode material has pores, and the volume ratio of micropores with a pore size less than 2 nm to all of the pores is 2.56%.

The amount of gas produced by the negative electrode material of 10g, which was mixed with the hydrochloric acid of 10 mL and a concentration of 1 mol/L, is 0.1 mL.

### Example 2

A preparation method for a negative electrode material, including the following steps:
(1) Al ingot of 100kg and SiO powders of 900kg, with a ratio n_{A1}: n_{Si} of 0.19:1, were placed into a vacuum furnace at 1600 °C;
(2) the valve at the opening of the furnace tube was closed, the furnace tube and the cooling area were evacuated to reach a pressure of 1000 Pa, and the evaporated vapors were stayed in the furnace for 60 minutes;
(3) the valve at the opening of the furnace tube was opened to allow the evaporated vapors to pass the cooling zone, thereby allowing the vapors to condensed into SiOₓ (0<x≤2);
(4) steps (2) to (3) were repeated for a total heat preservation duration of 10 hours to obtain the active substance.

The negative electrode material prepared by the above example includes an active substance, which includes silicon oxide and Al compound. The Al compound includes Al₂O₃, Al₂(SiO₃)₃, and Al₄(SiO₄)₃. The specific surface area of the negative electrode material is 18.3 m²/g. The X-ray diffraction analysis reveals that the negative electrode material has characteristic peaks corresponding to Si or SiO, MgO, MgSiO³, and Mg₂SiO₄. The grain size of the Si microcrystals is 19.3 nm, and the pH value is 8.4.

The specific heat capacity of the negative electrode material is 0.2 J/(g.K) to 2.0 J/(g.K). The porosity of the negative electrode material is 2.3%. The negative electrode material has pores, and the volume ratio of micropores with a pore size less than 2 nm to all of the pores 4.11 %.

The amount of gas produced by the negative electrode material of 10g, which was mixed with the hydrochloric acid of 10 mL and a concentration of 1 mol/L, is 0.7 mL.

### Example 3

A preparation method for a negative electrode material, including the following steps:
(1) Mg ingot of 100kg and SiO powders of 900kg, with a ratio n_{Mg}: n_{Si} of 0.73:1, were placed into a vacuum furnace at 1600 °C;
(2) the valve at the opening of the furnace tube was closed, the furnace tube and the cooling area were evacuated to reach a pressure of 1000 Pa, and the evaporated vapors were stayed in the furnace for 60 minutes;
(3) the valve at the opening of the furnace tube was opened to allow the evaporated vapors to pass the cooling zone with a temperature of 900 °C, thereby allowing the vapors to condensed into SiOₓ (0<x≤2);
(4) steps (2) to (3) were repeated for a total heat preservation duration of 10 hours to obtain the active substance;
(5) the active substance was placed into a high-temperature box furnace, methane gas was introduced into the furnace under nitrogen protection, thereby performing the carbon coating treatment at 950 °C for 4 hours. The product was crushed and sieved to obtain the negative electrode material.

The negative electrode material prepared by the above example includes an active substance, which includes silicon oxide and Mg compound. The Mg compound includes MgO, MgSiO₃, and Mg₂SiO₄. The specific surface area of the negative electrode material is 12.6 m²/g. The X-ray diffraction analysis reveals that the negative electrode material has characteristic peaks corresponding to Si or SiO, MgO, MgSiO₃, and Mg₂SiO₄. The grain size of the Si microcrystals is 15.1 nm, and the pH value is 11.2.

The mass ratio of carbon element in the negative electrode material is 10%. The specific heat capacity of the negative electrode material is 0.2 J/(g.K) to 2.0 J/(g.K). The porosity of the negative electrode material is 2.0%. The negative electrode material has pores, and the volume ratio of micropores with a pore size less than 2 nm to all of the pores is 3.23%.

The amount of gas produced by the negative electrode material of 10g, which was mixed with the hydrochloric acid of 10 mL and a concentration of 1 mol/L, is 0.9 mL.

### Example 4

The difference from Example 3 is that the temperature of the vacuum furnace was 2000 °C, and the pressure is 100 Pa.

The negative electrode material prepared by the above example includes an active substance, which includes silicon oxide and Mg compound. The Mg compound includes MgO, MgSiO₃, and Mg₂SiO₄. The specific surface area of the negative electrode material is 15.5 m²/g. The X-ray diffraction analysis reveals that the negative electrode material has characteristic peaks corresponding to Si or SiO, MgO, MgSiO₃, and Mg₂SiO₄. The grain size of the Si microcrystals is 9.9 nm, and the pH value is 10.8.

The mass ratio of carbon element in the negative electrode material is 10%. The specific heat capacity of the negative electrode material is 0.2 J/(g.K) to 2.0 J/(g.K). The porosity of the negative electrode material is 3.5%. The negative electrode material has pores, and the volume ratio of micropores with a pore size less than 2 nm to all of the pores is 1.34%.

The amount of gas produced by the negative electrode material of 10g, which was mixed with the hydrochloric acid of 10 mL and a concentration of 1 mol/L, is 0.1mL.

### Example 5

The difference from Example 3 was that the temperature of the vacuum furnace was 900 °C, and the pressure was 10 Pa.

The negative electrode material prepared by the above example includes an active substance, which includes silicon oxide and Mg compound. The Mg compound includes MgO, MgSiO₃, and Mg₂SiO₄. The specific surface area of the negative electrode material is 4.3 m²/g. The X-ray diffraction analysis reveals that the negative electrode material has characteristic peaks corresponding to Si or SiO, MgO, MgSiO₃, and Mg₂SiO₄. The grain size of the Si microcrystal grains is 6.5 nm, and the pH value is 13.1.

The mass ratio of carbon element in the negative electrode material is 10%. The specific heat capacity of the negative electrode material is 0.2 J/(g.K) to 2.0 J/(g.K). The porosity of the negative electrode material is 1.3%. The negative electrode material has pores, and the volume ratio of micropores with a pore size less than 2 nm to all of the pores is 1.40%.

The amount of gas produced by the negative electrode material of 10g, which was mixed with the hydrochloric acid of 10 mL and a concentration of 1 mol/L, is 0.1 mL.

### Example 6

The difference from Example 3 was that the input silicon-oxygen-containing raw material was SiO₂ and Si.

The negative electrode material prepared by the above example includes an active substance, which includes silicon oxide and Mg compound. The Mg compound includes MgO, MgSiO₃, and Mg₂SiO₄. The specific surface area of the negative electrode material is 7.6 m²/g. The X-ray diffraction analysis reveals that the negative electrode material has characteristic peaks corresponding to Si or SiO, MgO peak, MgSiO₃, and Mg₂SiO₄. The grain size of the Si microcrystals is 19.1 nm, and the pH value is 11.5.

The mass ratio of carbon element in the negative electrode material is 10%. The specific heat capacity of the negative electrode material is 0.2 J/(g.K) to 2.0 J/(g.K). The porosity of the negative electrode material is 2.4%. The negative electrode material has pores, and the volume ratio of micropores with a pore size less than 2 nm to all of the pores is 2.95%.

The amount of gas produced by the negative electrode material of 10g, which was mixed with the hydrochloric acid of 10 mL and a concentration of 1 mol/L, is 0.7 mL.

### Example 7

The difference from Example 3 was that the input metal M-containing raw material included CaO and Si, with a ratio n_{Ca}: n_{Si} of 0.73:1.

The negative electrode material prepared by the above example includes an active substance, which includes silicon oxide and Ca compound. The Ca compound includes CaO, CaSiO₃, and Ca₂SiO₄. The specific surface area of the negative electrode material is 9.0m²/g. The X-ray diffraction analysis reveals that the negative electrode material has characteristic peaks corresponding to Si or SiO, CaO peak, CaSiO₃, and Ca₂SiO₄. The grain size of the Si microcrystals is 15.5 nm, and the pH value is 13.0.

The mass ratio of carbon element in the negative electrode material is 10%. The specific heat capacity of the negative electrode material is 0.2 J/(g.K) to 2.0 J/(g.K). The porosity of the negative electrode material is 2.2%. The negative electrode material has pores, and the volume ratio of micropores with a pore size less than 2 nm to all of the pores is 4.01%.

The amount of gas produced by the negative electrode material of 10g, which was mixed with the hydrochloric acid of 10 mL and a concentration of 1 mol/L, is 0.7 mL.

### Example 8

The difference from Example 1 was that the input metal M-containing raw material inclluded MgO, CaO, and Si, with a ratio n_{Mg+Ca}: n_{Si} of 0.2:1.

The negative electrode material prepared by the above example includes an active substance, which includes silicon oxide, CaO, CaSiO₃, Ca₂SiO₄, MgO, MgSiO₃, and Mg₂SiO₄. The specific surface area of the negative electrode material is 9.8 m²/g. The X-ray diffraction analysis reveals that the negative electrode material has characteristic peaks corresponding to Si or SiO, CaO, CaSiO₃, Ca₂SiO₄, MgO, MgSiO₃, and Mg₂SiO₄. The grain size of the Si microcrystals is 15.0 nm, and the pH value is 12.7.

The mass ratio of carbon element in the negative electrode material is 10%. The specific heat capacity of the negative electrode material is 0.2 J/(g.K) to 2.0 J/(g.K). The porosity of the negative electrode material is 2.7%. The negative electrode material has pores, and the volume ratio of micropores with a pore size less than 2 nm to all of the pores is 4.89%.

The amount of gas produced by the negative electrode material of 10g, which was mixed with the hydrochloric acid of 10 mL and a concentration of 1 mol/L, is 0.6 mL.

### Example 9

The difference from Example 3 was that at step (2), the valve at the opening of the furnace tube was closed, the furnace tube and the cooling area were evacuated to reach a pressure of 1000 Pa, and the evaporated vapors were stayed in the furnace for 600 minutes.

The negative electrode material prepared by the above example includes an active substance, which includes silicon oxide and Mg compound. The Mg compound includes MgO, MgSiO₃, and Mg₂SiO₄. The specific surface area of the negative electrode material is 15.6 m²/g. The X-ray diffraction analysis reveals that the negative electrode material has characteristic peaks corresponding to Si or SiO, MgO, MgSiO₃, and Mg₂SiO₄. The grain size of the Si microcrystals is 17.0 nm, and the pH value is 11.7.

The mass ratio of carbon element in the negative electrode material is 10%. The specific heat capacity of the negative electrode material is 0.2 J/(g.K) to 2.0 J/(g.K). The porosity of the negative electrode material is 2.3%. The negative electrode material has pores, and the volume ratio of micropores with a pore size less than 2 nm to all of the pores is 2.49%.

The amount of gas produced by the negative electrode material of 10g, which was mixed with the hydrochloric acid of 10 mL and a concentration of 1 mol/L, is 0.3 mL.

### Example 10

The difference from Example 3 was that at step (2), the valve at the opening of the furnace tube was closed, the furnace tube and the cooling area were evacuated to reach a pressure of 1000 Pa, and the evaporated vapors were stayed in the furnace for 1 minute.

The negative electrode material prepared by the above example includes an active substance, which includes silicon oxide and Mg compound. The Mg compound includes MgO, MgSiO₃, and Mg₂SiO₄. The specific surface area of the negative electrode material is 11.3 m²/g. The X-ray diffraction analysis reveals that the negative electrode material has characteristic peaks corresponding to Si or SiO, MgO, MgSiO₃, and Mg₂SiO₄. The grain size of the Si microcrystals is 13.5 nm, and the pH value is 10.9.

The mass ratio of carbon element in the negative electrode material is 10%. The specific heat capacity of the negative electrode material is 0.2 J/(g.K) to 2.0 J/(g.K). The porosity of the negative electrode material is 1.8%. The negative electrode material has pores, and the volume ratio of micropores with a pore size less than 2 nm to all of the pores is 4.93%.

The amount of gas produced by the negative electrode material of 10g, which was mixed with the hydrochloric acid of 10 mL and a concentration of 1 mol/L, is 0.9 mL.

### Example 11

A preparation method for a negative electrode material, including the following steps:
(1) Mg ingot of 100kg and SiO powders of 900kg were into a vacuum furnace at 1600 °C;
(2) the furnace tube and the cooling area were evacuated to reach a pressure of 1000 Pa, and the evaporated vapors were immediately directed into the cooling zone and condensed into SiOₓ (0<x≤2). The total reaction time was 10 hours to obtain the active substance.
(3) Hydrochloric acid of 1 mol/L was slowly added to the active substance and continuously stirred. When no bubbles appeared by adding the hydrochloric acid, the filtrate was filtered, and the filter residue was dried under nitrogen atmosphere at 80 °C, thereby obtaining the acid-washed active substance.
(4) the acid-washed active substance was placed in a high-temperature box furnace, methane gas was introduced into the furnace under nitrogen protection, thereby performing the carbon coating treatment at 950 °C for 4 hours. The product was crushed and sieved to obtain the negative electrode material.

The negative electrode material prepared by the above example includes an active substance, which includes silicon oxide and Mg compound. The specific surface area of the negative electrode material is 25.3 m²/g. The X-ray diffraction analysis reveals that the negative electrode material has characteristic peaks corresponding to Si or SiO, MgSiO₃, but without the peak of Mg₂Si. The grain size of the Si microcrystals is 20.9 nm, and the pH value is 7.7.

### Comparative example 1

A preparation method for a negative electrode material, including the following steps:
(1) Mg ingot of 100kg and SiO powders of 900kg were placed into a vacuum furnace at 1600 °C;
(2) the furnace tube and the cooling area were evacuated to reach a pressure of 1000 Pa, and the evaporated vapors were immediately directed into the cooling zone and condensed into SiOₓ (0<x≤2). The total reaction time was 10 hours to obtain the active substance;
(3) the active substance was placed in a high-temperature box furnace, methane gas was introduced into the furnace under nitrogen protection, thereby performing the carbon coating treatment at 950 °C for 4 hours. The product was crushed and sieved to obtain the negative electrode material.

The specific surface area of the negative electrode material prepared by the above example is 15.9 m²/g. The X-ray diffraction analysis reveals that the negative electrode material has characteristic peaks corresponding to Si or SiO, MgO, MgSiO₃, Mg₂SiO₄, and a small amount of Mg₂Si. The grain size of the Si microcrystals is 25.6 nm, and the pH value is 13.0. The peak height ratio I of the strongest peak of Mg₂Si peak to the strongest peak of Si characteristic peak is 0.1.

The performances of the negative electrode materials prepared by the above examples and the comparative example were tested. The test results of the above performances were shown in Table 1.

**Table 1. Summary of test results of performances**

| Sample | Amount of produced gas (ml) | pH | Specific surface area (m²/g) | Grain size of the Si microcryst als (nm) | Specific heat capacity (J/(g.K)) | Initial reversible capacity (mAh/g) | Initial coulombic efficiency (%) | Capacity retention rate after 50 cycles (%) | Expansion rate of electrode plate (%) |
|---|---|---|---|---|---|---|---|---|---|
| Example 1 | 0.3 | 11.9 | 7.3 | 19.9 | 0.2-2.0 | 1501 | 86.3 | 91.2 | 38.3 |
| Example 2 | 0.7 | 8.4 | 18.3 | 19.3 | 0.2-2.0 | 1244 | 81.3 | 88.9 | 40.3 |
| Example 3 | 0.9 | 11.2 | 12.6 | 15.1 | 0.2-2.0 | 1398 | 82.9 | 90.2 | 37.8 |
| Example 4 | 0.1 | 10.8 | 15.5 | 19.9 | 0.2-2.0 | 1203 | 88.2 | 92.3 | 40.7 |
| Example 5 | 0.1 | 13.1 | 4.3 | 6.5 | 0.2-2.0 | 1561 | 85.5 | 90 | 35.1 |
| Example 6 | 0.7 | 11.5 | 7.6 | 19.1 | 0.2-2.0 | 1495 | 86.1 | 91.3 | 38.4 |
| Example 7 | 0.7 | 13 | 9 | 15.5 | 0.2-2.0 | 1417 | 83.2 | 90.4 | 37.6 |
| Example 8 | 0.6 | 12.7 | 9.8 | 12.7 | 0.2-2.0 | 1423 | 83.3 | 90.7 | 37.9 |
| Example 9 | 0.3 | 11.7 | 15.6 | 17.0 | 0.2-2.0 | 1402 | 83.1 | 90.0 | 38.0 |
| Example 10 | 0.9 | 10.9 | 11.3 | 13.5 | 0.2-2.0 | 1422 | 83.0 | 88.5 | 41.1 |
| Example 11 | 0 | 7.7 | 45.3 | 25.9 | <0.2 | 1343 | 81.8 | 86.3 | 43.6 |
| Comparative Example 1 | 5 | 13 | 15.9 | 25.6 | >2.0 | 1414 | 83.1 | 83.3 | 47.2 |

According to the data in Table 1, the negative electrode materials prepared by Examples 1-11 include an active substance, and the compound of metal M in the active substance includes almost no silicide of metal M. The amount of gas produced by the negative electrode material is less than 1 mL. This is because the mixture of the silicon-oxygen-containing raw material and the metal M-containing raw material is heated under reduced pressure and at high temperature to form vapors of metal M and silicon-oxygen-containing raw material. The vapors are fully mixed to reduce the excess local vapor of the metal M, such that Si simple substance and silicide of metal M, which are formed by the reduction of local vapor of the silicon-oxygen-containing raw material, are reduced. The grain size of the Si microcrystals in the silicon oxide is effectively controlled, thereby improving the rate performance and cycling stability of the negative electrode material.

The negative electrode material of Example 2 is not subjected to carbon coating treatment, resulting in a larger specific surface area of the negative electrode material. Thus, the side reaction between the negative electrode material and the electrolyte is increased during cycling, leading to a slight decrease in the rate performance and cycling performance of the battery.

Although Example 11 uses an acid washing process to remove the silicide of metal M, the acid washing process did not decrease the size of some large Si grains that had already been generated before the acid washing process, resulting in a decrease in the cycling life and increase in the expansion rate of the material. At the same time, the acid washing process may also result in a larger specific surface area due to the removal of some substances, leading to the generation of more irreversible product of Li₄SiO₄, Li₂O, and SEI films during the first lithiation, resulting in a decrease in the first capacity and the initial coulombic efficiency. From the specific heat capacity, it can also be seen that the specific heat capacity after acid washing is less than 0.2 J/(g.K), indicating that the negative electrode material contains some materials with low specific heat capacity. This is originated from the local Si simple substance generated by insufficient mixing of vapors during the evaporation process, which cannot be removed during the acid washing and causes a decrease in the cycling life and an increase in expansion rate of the material. Thus, by removing the silicide of metal M generated during the reaction by the acid washing, the performances are far inferior than the performances in the present application that fully mixes the vapors during evaporation to prevent the formation of the silicide of metal M.

In the preparation in Comparative Example 1, the vapors are immediately directed to the cooling zone and condensed into silicon oxide. The vapors are not fully mixed, resulting in the formation of local silicide of metal M. At the same time, a large amount of heat is released, resulting in a significant increase in the size of Si grains and a decrease in the cycling performance and expansion rate of the negative electrode material.

The above embodiments are only for describing but not intended to limit the present disclosure. Although the embodiments of the present disclosure have been described, those having ordinary skill in the art can understand that changes may be made within the principles of the present disclosure, up to and including the full extent established by the broad general meaning of the terms used in the claims. It will, therefore, be appreciated that the embodiments described above may be modified within the scope of the claims.

## Claims

1. A negative electrode material, **characterized in that**, the negative electrode material comprises:
an active substance, wherein the active substance comprises silicon oxide and a compound of metal M, the compound of metal M comprises at least one of an oxide of metal M and a silicate of metal M, and the metal M is at least one metal with an electronegativity less than 1.8;
wherein an amount of gas produced by the negative electrode material of 10g, which is mixed with a hydrochloric acid of 10 mL and a concentration of 1 mol/L, is less than or equal to 1 mL.

2. The negative electrode material according to claim 1, **characterized in that**, the silicon oxide comprises silicon element and oxygen element, an atomic ratio of the silicon element to the oxygen element is in a range from 0 to 2, and the atomic ratio is not 0.

3. The negative electrode material according to claim 1, **characterized in that**, the silicon oxide has a chemical formula of SiOₓ, wherein 0<x≤2.

4. The negative electrode material according to any one of claims 1-3, **characterized in that**, satisfies at least one of following features (1) to (7):
(1) the metal M is selected from a group consisting Li, K, Na, Mg, Ca, Al, La, Zn, Ti, Mn, and any combination thereof;
(2) the metal M is Mg;
(3) the silicon oxide includes Si microcrystals, the Si microcrystals have a grain size less than or equal to 20 nm;
(4) a pH value of the negative electrode material is in a range from 8 to 14;
(5) a specific surface area of the negative electrode material is less than or equal to 30 m²/g;
(6) a median particle size of the negative electrode material is in a range from 1 µm to 20 µm; and
(7) a wadell sphericity of the negative electrode material is denoted as Φ, wherein 0.3<Φ<1.

5. The negative electrode material according to any one of claims 1-4, **characterized in that**, the negative electrode material has a characteristic peak A, a characteristic peak B, and/or a characteristic peak C when analyzed by X-Ray Diffraction, the characteristic peak A represents a characteristic peak of Si or SiO, the characteristic peak B represents a characteristic peak of the oxide of metal M, the characteristic peak C represents a characteristic peak of the silicate of metal M, a characteristic peak of silicide of metal M is denoted as a characteristic peak D, a peak height ratio of a strongest peak of the characteristic peak D to a strongest peak of the characteristic peak A is **I,** wherein 0≤I<0.05.

6. A negative electrode material, **characterized in that**, the negative electrode material comprises:
an active substance, wherein the active substance comprises silicon oxide and a compound of metal M, the compound of metal M comprises at least one of an oxide of metal M and a silicate of metal M, and the metal M is at least one metal with an electronegativity less than 1.8;
wherein the negative electrode material has a characteristic peak A, a characteristic peak B, and/or a characteristic peak C when analyzed by X-Ray Diffraction, the characteristic peak A represents a characteristic peak of Si or SiO, the characteristic peak B represents a characteristic peak of the oxide of metal M, the characteristic peak C represents a characteristic peak of the silicate of metal M, a characteristic peak of silicide of metal M is denoted as a characteristic peak D, a peak height ratio of a strongest peak of the characteristic peak D to a strongest peak of the characteristic peak A is I, wherein 0≤1<0.05.

7. The negative electrode material according to claim 6, **characterized in that**, the silicon oxide comprises silicon element and oxygen element, an atomic ratio of the silicon element to the oxygen element is in a range from 0 to 2, and the atomic ratio is not 0.

8. The negative electrode material according to claim 6, **characterized in that**, the silicon oxide has a chemical formula of SiOₓ, wherein 0<x≤2.

9. The negative electrode material according to any one of claims 6-8, **characterized in that**, satisfies at least one of following features (1) to (7):
(1) the metal M is selected from a group consisting Li, K, Na, Mg, Ca, Al, La, Zn, Ti, Mn, and any combination thereof;
(2) the metal M is Mg;
(3) the silicon oxide includes Si microcrystals, the Si microcrystals have a grain size less than or equal to 20 nm;
(4) a pH value of the negative electrode material is in a range from 8 to 14;
(5) a specific surface area of the negative electrode material is less than or equal to 30 m²/g;
(6) a median particle size of the negative electrode material is in a range from 1 µm to 20 µm; and
(7) a wadell sphericity of the negative electrode material is denoted as Φ, wherein 0.3<Φ<1.

10. The negative electrode material according to any one of claims 1-8, **characterized in that**, satisfies at least one of following features (1) to (4):
(1) the negative electrode material further comprises a carbon material formed on at least a portion of a surface of the active substance;
(2) the negative electrode material further comprises a carbon material layer formed on at least a portion of a surface of the active substance, and a thickness of the carbon material layer is in a range from 10 nm to 500 nm;
(3) a mass ratio of carbon element in the negative electrode material is in a range from 1% to 40%; and
(4) a porosity of the negative electrode material is less than 20%.

11. The negative electrode material according to any one of claims 1-10, **characterized in that**, a specific heat capacity of the negative electrode material is in a range from 0.2 J/(g.K) to 2.0 J/(g.K).

12. The negative electrode material according to any one of claims 1-11, **characterized in that**, the negative electrode material has pores, and a volume ratio of micropores with a pore size less than 2 nm to all of the pores is in a range from 1% to 5%.

13. A preparation method for a negative electrode material, **characterized in that**, the method comprises:
heating a mixture including a metal M-containing raw material and a silicon-oxygen-containing raw material under reduced pressure to form vapors of the metal M and the silicon-oxygen-containing raw material, and allowing the vapors to fully mix for 1 minute to 600 minutes, wherein the metal M is at least one metal with an electronegativity less than 1.8; and
cooling the mixed vapors to obtain an active substance, wherein the active substance includes silicon oxide and a compound of metal M, wherein the compound of metal M includes at least one of an oxide of metal M and a silicate of metal M.

14. The preparation method according to claim 13, **characterized in that**, comprising at least one of following features (1) to (10):
(1) the metal M-containing raw material includes at least one of a simple substance of metal M and an oxide of metal M;
(2) the metal M is selected from a group consisting Li, K, Na, Mg, Ca, Al, La, Zn, Ti, Mn, and any combination thereof;
(3) the silicon-oxygen-containing raw material includes at least one of a mixture of Si, SiO_{y}, and SiO₂, a mixture of SiO_{y} and Si, and a mixture of Si and SiO₂, wherein 0<y<2;
(4) a molar amount of the metal M in the metal M-containing raw material is denoted as n_{M}, a molar amount of Si in the silicon-oxygen-containing raw material is denoted as n_{Si}, wherein n_{M}: n_{Si}=(0.2-1): 1;
(5) the heating under reduced pressure is performed at a temperature in a range from 900 °C to 2000 °C;
(6) the heating under reduced pressure is performed at a pressure in a range from 0.1 Pa to 1000 Pa;
(7) the cooling is performed at a temperature in a range from 500 °C and 900 °C;
(8) the heating under reduced pressure is performed at a pressure in a range from 0.1 Pa to 1000 Pa;
(9) the silicon oxide includes silicon element and oxygen element, an atomic ratio of the silicon element to the oxygen element is in a range from 0 to 2, and the atomic ratio is not 0; and
(10) the silicon oxide has a chemical formula of SiOₓ, wherein 0<x≤2.

15. A battery, **characterized in that**, the battery comprises:
a negative electrode material according to any one of claims 1 to 12; or
a negative electrode material prepared by a preparation method according to any one of claims 13 to 14.
